# EUROPÄISCHE PATENTANMELDUNG

(11) **EP 1 245 866 A2**
(43) Veröffentlichungstag der Anmeldung: **02.10.2002**
(21) Anmeldenummer: 02005594.3
(22) Anmeldetag: 12.03.2002
(51) Int. Cl.: F16H 19/00, F16H 57/02, F16B 21/18

(54) **Elektrischer Stellantrieb für ein Kraftfahrzeug**

(30) Priorität: 27.03.2001 DE 10115155
(71) Anmelder: Hella KG Hueck & Co., 59552 Lippstadt (DE)
(72) Erfinder: Schiewer, Norbert, 59555 Lippstadt (DE)

(57) **Zusammenfassung**

Beschrieben wird ein elektrischer Stellantrieb für ein Kraftfahrzeug mit einem drehrichtungsumkehrbaren Antriebsmotor (1) und einem diesem nachgeordneten Getriebe, welches ein Stirnradgetriebe und ein Schneckengetriebe umfaßt, wobei das mit der Motorwelle verbundene Antriebsritzel (3) und das Abtriebsschneckenrad (8) durch ein ein Stirnrad (12) und eine Schnecke (13) aufweisendes Stufenrad (4) verbunden sind, mit einem durch die Schnecke (13) angetriebenen Schneckenrad und einer mit dem Schneckenrad verbundenen Abtriebswelle (16), mit einem Getriebegehäuse (9), und mit einer Sicherungsscheibe (17), die in einer Nut der Abtriebswelle (16) angeordnet ist und sich gegen das Getriebegehäuse (9) oder die in das Gehäuse eingepreßte Abtriebswellenlagerung (15) abstützt, wobei die Sicherungsscheibe (17) als ein geöffnetes, gestanztes Federblech ausgebildet ist, welches zur Doppelung umgelegt ist und das in dem sich innerhalb der Abtriebswellennut (14) befindlichen Durchmesserbereich in beiden Axialrichtungen je zwei den Abtriebswellennutflächen zugewandte, aufgestellte Biegefedern (18) aufweist.

Hierdurch wird auf einfache und kostengünstige Weise eine axiale Bewegung der Abtriebswelle und somit des Schneckenrades verhindert und so daß die Selbsthemmung des Schneckengetriebes auch unter Vibrationsbeanspruchungen erhalten bleibt.

## Beschreibung

Die Erfindung betrifft einen elektrischen Stellantrieb für ein Kraftfahrzeug mit einem drehrichtungsumkehrbaren Antriebsmotor und einem diesem nachgeordneten Getriebe, welches ein Stirnradgetriebe und ein Schneckengetriebe umfaßt, wobei das mit der Motorwelle verbundene Antriebsritzel und das Abtriebsschneckenrad durch ein ein Stirnrad und eine Schnecke aufweisendes Stufenrad verbunden sind, mit einem durch die Schnecke angetriebenen Schneckenrad und einer mit dem Schneckenrad verbundenen Abtriebswelle, mit einem Getriebegehäuse, und mit einer Sicherungsscheibe, die in einer Nut der Abtriebswelle angeordnet ist und sich gegen das Getriebegehäuse oder die in das Gehäuse eingepreßte Abtriebswellenlagerung abstützt.

Aus der deutschen Patentschrift DE 198 56 715 C1 ist ein Stellantrieb bekannt, bei dem das Stufenrad auf einer Achse zwischen zwei Anlauffedern gelagert ist, welche das Stufenrad an den Endpositionen des Stellbereiches jeweils mit einer axialen Federkraft beaufschlagen.

Dieser Stellantrieb ist mit einem selbsthemmenden Schneckengetriebe ausgebildet, das geregelte Stellbewegungen innerhalb eines durch externe Anschläge begrenzten Bereiches ausführt.

Zur Absenkung des Temperaturniveaus im Steller und zur Erhöhung der Lebensdauer von Gleichstrommotor und Getriebe ist die jeweils ausgeregelte Getriebestellung durch die Selbsthemmung des Schneckengetriebes bei abgeschaltetem Antriebsmotor sicher zu halten.

Die Selbsthemmung basiert auf der großen Reibung zwischen den durch eine von außen wirkende Kraft aufeinandergepreßten Zahnflanken von Schneckenrad und Schnecke bei spezieller, der Selbsthemmung zuträglicher, Schneckensteigung.

Die sich aus der Schneckensteigung ergebene Schrägverzahnung des Schneckenrades bewirkt axiale Kräfte an der Abtriebswelle. Diese werden durch axiales Festsetzen der Abtriebswelle aufgenommen. Da prozeßsicher ein leichtgängiges Drehen der Abtriebswelle zu gewährleisten ist, muß die Axialsicherung mit einem Spiel in Achsrichtung behaftet sein.

Eine hierzu geeignete, bekannte Maßnahme ist, zur Aufnahme der Axialkräfte auf die Abtriebswelle eine Sicherungsscheibe vorzusehen, die in einer Nut der Abtriebswelle angeordnet ist und sich gegen das Getriebegehäuse oder die in das Gehäuse eingepreßte Abtriebswellenlagerung abstützt. Um ein Festklemmen der Abtriebswelle zu verhindern, ist die Passung von Sicherungsscheibe und Abtriebswellennut im allgemeinen als Spielpassung ausgeführt.

Je nach vorgesehener Verwendung im Kraftfahrzeug ist ein solcher Stellantrieb hohen Vibrationsbeanspruchungen ausgesetzt. Unter Vibration bewegt sich die Abtriebswelle axial im Bereich dieses Spieles. Durch die Auf- und Abbewegung des Schneckenrades reiben die aneinandergepreßten Zahnflanken von Schneckenrad und Schnecke aufeinander. Dadurch wird, infolge der Schrägverzahnung in die Schnecke eine Drehbewegung eingeleitet, die zum Verlust der Selbsthemmung führt.

Es ist die Aufgabe der Erfindung einen Stellantrieb möglichst einfach und kostengünstig so auszubilden, daß eine axiale Bewegung der Abtriebswelle und somit des Schneckenrades verhindert ist und so die Selbsthemmung unter Vibrationsbeanspruchungen erhalten bleibt.

Diese Aufgabe wird erfindungsgemäß dadurch gelöst, daß die Sicherungsscheibe als ein geöffnetes, gestanztes Federblech ausgebildet ist, welches zur Doppelung umgelegt ist und das in dem sich innerhalb der Abtriebswellennut befindlichen Durchmesserbereich in beiden Axialrichtungen je zwei den Abtriebswellennutflächen zugewandte, aufgestellte Biegefedern aufweist.

Durch die Ausbildung der Sicherungsscheibe als beidseitig wirkende Axialfeder wird, zusätzlich zu den bekannten Funktionen einer Sicherungsscheibe, ein Axialspiel der Abtriebswelle prozeßsicher verhindert und somit das Lösen der Selbsthemmung infolge desselben unterbunden. Dabei wird vorteilhafterweise kein zusätzliches Bauteil benötigt und zudem die erprobte, einfache Montagetechnologie beibehalten. Die Plazierung der axialspielaufnehmenden Feder in der Abtriebswellennut und im Bereich einer schmierstoffabsondernden Lagerung bewirkt aufgrund der geschmierten Stahl-auf-Stahl-Reibung eine äußerst geringe Zunahme der die Drehbewegung der Abtriebswelle behindernden Reibung.

Vorteilhaft ist es, wenn die das Axialspiel aufnehmenden Biegefedern der Sicherungsscheibe ausschließlich innerhalb der Abtriebswellennut angeordnet sind und somit durch das Eindrücken der Lager, etwa im Gegensatz zu einer Wellscheibe, keine, ihre Federkraft schädigende, Veränderung erfahren.

Ebenfalls vorteilhaft ist, daß sich die Biegefedervorspannkraft der Federscheibe erst durch das Zusammendrücken des Auflagebereiches wischen Getriebegehäuse und Lager bzw. zwei Lagern einstellt. Dies macht eine einfache Handmontage möglich.

Vorteilhaft ist auch wenn die Biegefedern der Federscheibe Einführschrägen aufweisen, die die Montage in die Wellennut dahingehend erleichtern, daß zur Überwindung der Vorspannung der Biegefedern nur die Einschubbewegung der Federscheibe in die Wellennut vollzogen werden muß, wobei sich die Biegefedern entlang der Einführschrägen selbsttätig zusammendrücken.

Ein Ausführungsbeispiel eines erfindungsgemäßen Stellantriebs ist in der Zeichnung dargestellt und wird im folgenden anhand der Zeichnung näher erläutert.

Es zeigen:
Figur 1 die Abtriebswelle mit Lagerung eines erfindungsgemäßen Stellantriebs;
Figur 2 den Aufbau eines Stellantriebs in einem geöffnet dargestelltem Gehäuse;
Figur 3 eine Sicherungsscheibe in drei verschiedenen Ansichten (Fig.3 a-c);
Figur 4 die Anordnung der Sicherungsscheibe auf der Abtriebswelle (a) ohne und (b) mit Wellenlagerung

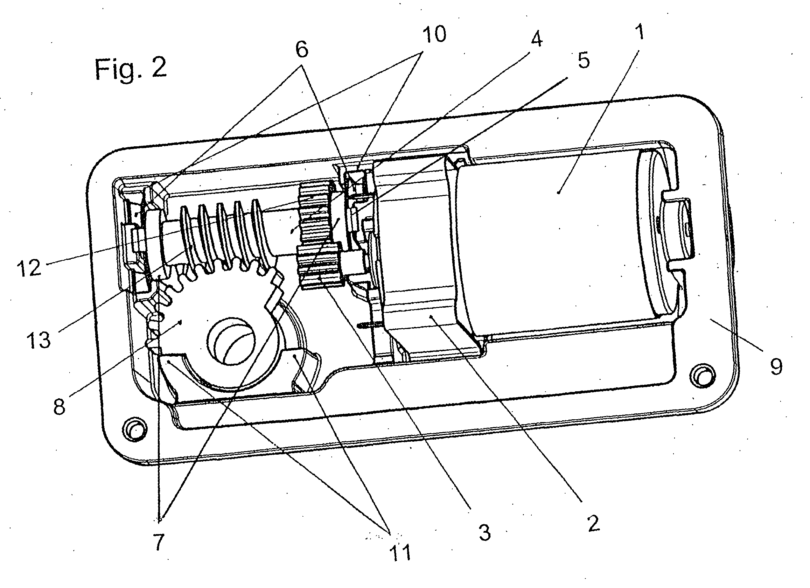

In der Figur 2 ist ein Stellantrieb gezeigt, der zur Betätigung beweglicher Gegenstände in Kraftfahrzeugen, wie z.B. der Drosselklappe oder Fensterscheiben verwendet werden kann.

Der Stellantrieb besteht aus einem umsteuerbaren Gleichstrommotor (1), der mittels eines federnd ausgeführtem Motorhalters (2) mit einem Gehäuse (9) verbunden ist. Um eine möglichst platzsparende, schlanke Gestaltung des Stellantriebs zu erreichen, ist das dem Gleichstrommotor (1) nachgeschaltete Getriebe in der Verlängerung der Motorlängsachse angeordnet.

Das Getriebe umfaßt hierbei ein Stirnradgetriebe und ein Schneckengetriebe, wobei das mit der Motorwelle verbundene Antriebsritzel (3) und das Abtriebsschneckenrad (8) durch eine ein Stirnrad (12) und eine Schnecke (13) aufweisendes Stufenrad (4) verbunden sind.

Das Stufenrad (4) ist auf einer Achse (5) zwischen zwei Anlauffedern (6) gelagert, welche das Stufenrad (4) in den Endpositionen des Stellbereiches jeweils mit einer axialen Federkraft beaufschlagen. Die Anlauffedern (6) sind als zweischenklige Blattfedern ausgebildet, wobei sich die Federschenkel etwa v-förmig gegenüberstehen. Die Anlauffedern sind in Aufnahmetaschen (10) des Gehäuses (9) gehaltert.

Die stirnseitigen Endabschnitte des Stufenrades (4) sind als radial verbreiterte Abschnitte (Axialanlaufbereiche (7)) ausgebildet und liegen an den Anlauffedern (6) an.

Die Funktionsweise des Stellantriebs ist die folgende: Eine nicht dargestellte Steuerschaltung bestromt den Gleichstrommotor (1), welcher mittels seines Antriebsritzels (3) das einstückig mit dem Stufenrad (4) ausgebildete Stirnrad (12) antreibt. Die, ebenfalls einstückig mit dem Stufenrad (4) ausgebildete Schnecke (13) treibt über das Abtriebszahnsegment (8) eine in der Figur 2 nicht dargestellte, senkrecht zur Papierebene aus dem Gehäuse (9) herausgeführte Abtriebswelle an.

Der maximale Stellbereich ist dabei entweder durch die internen Gehäuseanschläge (11) oder, in den meisten Fällen, durch die externe Anschläge des durch die Abtriebswelle angetriebenen Gegenstandes vorgegeben. Wird einer der Anschläge erreicht, so kämmt die Schnecke (13) an dem nun feststehenden Abtriebszahnsegment, wodurch sich das Stufenrad (4) auf seiner Achse in Richtung auf eine der Anlauffedern (6) verschiebt. Die sich dadurch spannende Anlauffeder (6) dämpft dabei das Drehmoment des Gleichstrommotors (1) ab, so daß ein Festklemmen der Schnecke (13) an dem Antriebszahnsegment (8) vermieden wird.

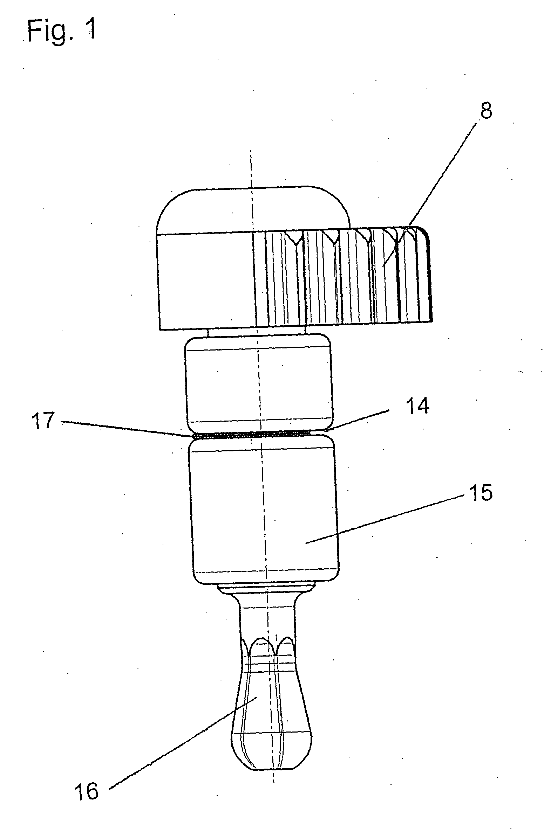

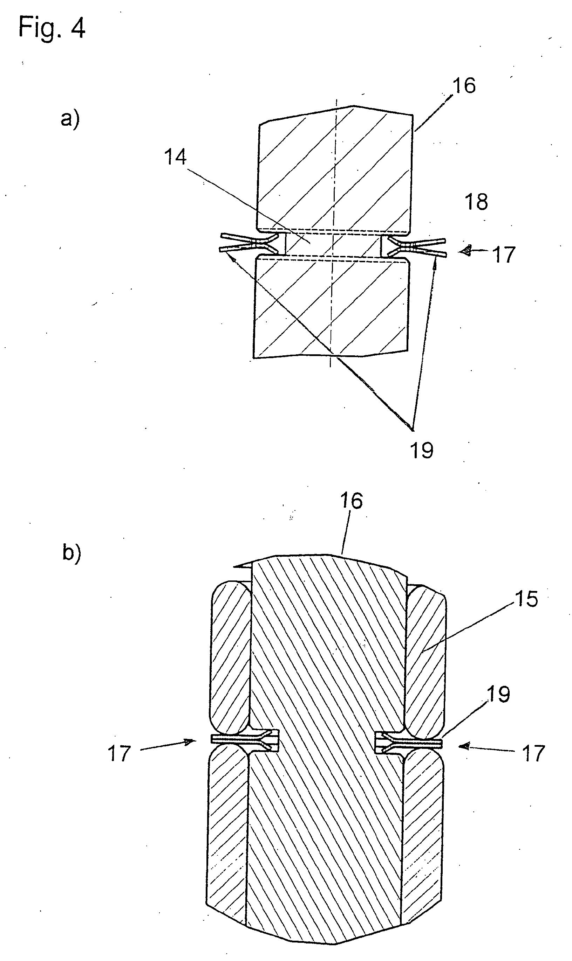

Die Abtriebswelle, von der in der Darstellung der Figur 2 lediglich das Antriebsschneckenrad (8) erkennbar ist, ist in den Figuren 1 und 4 im Detail dargestellt.
Die Antriebswelle (16) ist über eine Lagerung (15) in ein Getriebegehäuse montiert. In eine Abtriebswellennut (14) ist eine Sicherungsscheibe (17) eingeführt.

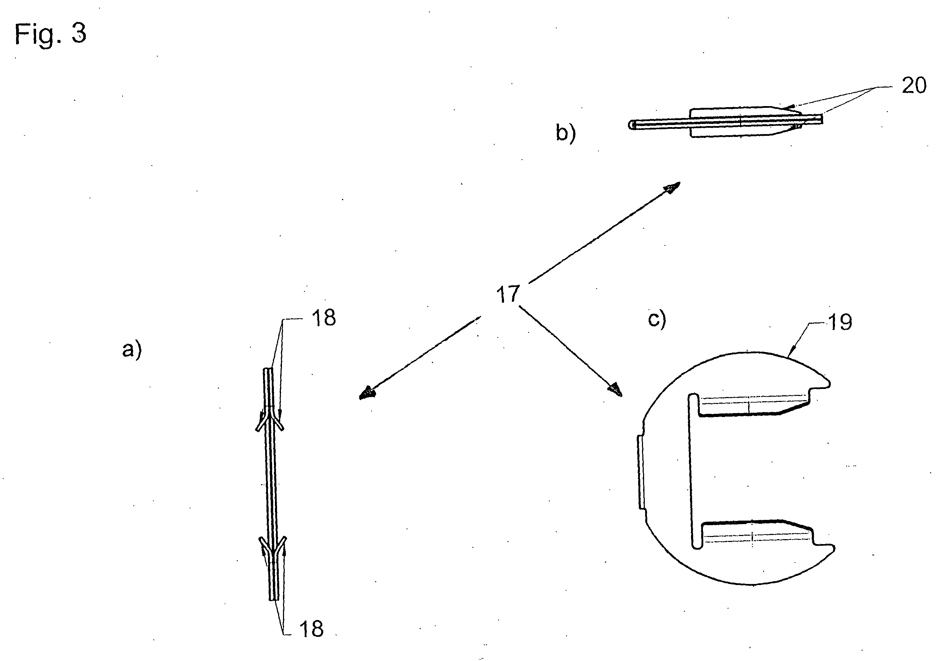

Die genaue Ausgestaltung dieser Sicherheitsscheibe (17) zeigt die Figur 3 in zwei Seitenansichten (a, b) und einer Draufsicht. Anstelle der als Stand der Technik bekannten geöffneten Sicherungsscheibe findet ein ebenso geöffnetes, gestanztes Federblech Verwendung, das zur Doppelung umgelegt ist und das dem sich innerhalb der Abtriebswellennut (der in der Figur 3 nicht dargestellten Abtriebswelle; siehe hierzu auch Figur 1) befindlichen Durchmesserbereich in beiden Axialrichtungen je zwei den Abtriebswellennutflächen zugewandte, aufgestellte Biegefedern (18) aufweist. Der sich außerhalb der Abtriebswellennut (14) befindene Auflagebereich (19) ist glattflächig ausgeführt. Die Doppelung des Federmaterials durch einmaliges, vollständiges Umlegen erzeugt ein symmetrisches Federpaket. Hierdurch wird die Verwendung sehr dünnen Materials ermöglicht, mit dem sich trotz der geringen Federwege innerhalb der Abtriebswellennut beherrschbare Federraten einstellen. Ein weiterer Vorteil der symmetrischen Doppelfeder besteht in dem gleichmäßigen Abstützen der Biegefedern (18) an beiden Abtriebswellennutflächen. Das resultierende Geradehalten des Auflagebereiches (19) verhindert, daß beim Einspannen desselben zwischen die Lager der Abtriebswellenlagerung (15) unbeabsichtigte Kippausgleichkräfte hinzugebracht werden.

Durch die Ausbildung der Sicherungsscheibe (17) als beidseitig wirkende Axialfeder wird das Spiel in der Abtriebswellennut (14) vollständig aufgenommen. Wesentlich ist, daß die Federbereiche (18) sich ausschließlich innerhalb der Abtriebswellennut (14) befinden und somit nicht beim Abstützen gegen das Getriebegehäuse bzw. die Wellenlagerung (15) zusammengedrückt und damit wirkungslos gemacht werden.

Die durch die Axialfeder erzeugte zusätzliche Reibung in der Abtriebswellennut (14) fällt äußerst gering aus, da nur Stahl-auf-Stahl-Linienberührungen in einer durch den Schmierstoffaustritt aus den benachbarten Lagern geschmierten Umgebung stattfinden. Funktionelle Voraussetzung für die selbsthemmungserhaltene Wirkung ist die Auslegung der Biegefedern (18) auf eine Kraft, die, nach der Vorspannung durch Eindrücken in die Abtriebswellennut (14) und Montage der Abtriebswelle (16) in das Gehäuse, größer ist, als das Produkt der Masse der Abtriebswelle (16) und der Schwingungsbeschleunigung. Eine über die Vorspannung hinausgehende Federwirkung infolge zu Schwingungen angeregter Massen findet somit auslegungsbedingt nicht statt.

Vorteilhaft ist, daß die nötige zusätzliche selbsthemmungserhaltene Maßnahme ohne zusätzliches Bauteil und unter Beibehaltung der bekannten, einfachen Montagetechnologie realisiert wird.

Die Figur 4 verdeutlichet die Anordnung der Sicherungsscheibe auf der Abtriebswelle (16) in jeweils einer Darstellung (a) ohne und (b) mit Wellenlagerung (15).

Eine Erleichterung der Montage wird dadurch erzielt, daß sich die beim Eindrücken vorspannenden Federbereiche (18) durch Aufstellen des noch unbelasteten Auflagebereiches (19) entlasten. Dadurch ist beim Bestücken nur ein geringer Anteil der Vorspannkraft aufzubringen. Die benötigte Vorspannkraft wird erst durch das Zusammendrücken des Auflagebereiches (19) beim Einbau der Abtriebswelle (16) in das Getriebegehäuse eingestellt.

Weiterhin wird die Montage durch die Einführschrägen (20), die in der Figur 3b dargestellt sind, an den Federbereichen (18) erleichtert, da nur die Einschubbewegung auszuführen ist. Die hierbei automatisch einfedernden Federbereiche (18) erübrigen ein zusätzlichen Zusammendrücken.

### Bezugszeichen

- 1: Gleichstrommotor
- 2: Motorhalter
- 3: Antriebsritzel
- 4: Stufenrad
- 5: Achse
- 6: Anlauffedern
- 7: Axialanlaufbereiche (des Stufenrades)
- 8: Abtriebsschneckenrad (Abtriebszahnsegment)
- 9: Gehäuse
- 10: Aufnahmetaschen
- 11: interne Gehäuseanschläge
- 12: Stirnrad
- 13: Schnecke
- 14: Abtriebswellennut
- 15: Abtriebswellenlagerung
- 16: Abtriebswelle
- 17: Sicherungsscheibe
- 18: Federbereiche (Biegefedern)
- 19: Auflagebereich
- 20: Einführschrägen

## Patentansprüche

1. Elektrischer Stellantrieb für ein Kraftfahrzeug mit einem drehrichtungsumkehrbaren Antriebsmotor und einem diesem nachgeordneten Getriebe, welches ein Stirnradgetriebe und ein Schneckengetriebe umfaßt, wobei das mit der Motorwelle verbundene Antriebsritzel und das Abtriebsschneckenrad durch ein ein Stirnrad und eine Schnecke aufweisendes Stufenrad verbunden sind,
mit einem durch die Schnecke angetriebenen Schneckenrad und einer mit dem Schneckenrad verbundenen Abtriebswelle,
mit einem Getriebegehäuse,
und mit einer Sicherungsscheibe, die in einer Nut der Abtriebswelle angeordnet ist und sich gegen das Getriebegehäuse oder die in das Gehäuse eingepreßte Abtriebswellenlagerung abstützt,
**dadurch gekennzeichnet,**
**daß** die Sicherungsscheibe (17) als ein geöffnetes, gestanztes Federblech ausgebildet ist, welches zur Doppelung umgelegt ist und das in dem sich innerhalb der Abtriebswellennut (14) befindlichen Durchmesserbereich in beiden Axialrichtungen je zwei den Abtriebswellennutflächen zugewandte, aufgestellte Biegefedern (18) aufweist.

2. Elektrischer Stellantrieb nach Anspruch 1, **dadurch gekennzeichnet, daß** die das Axialspiel aufnehmenden Biegefedern (18) der Sicherungsscheibe (17) sich ausschließlich innerhalb der Abtriebswellennut (14) befinden.

3. Elektrischer Stellantrieb nach Anspruch 1, **dadurch gekennzeichnet, daß** die Biegefedern (18) der Federscheibe (17) Einführschrägen (20) aufweisen.
